# EUROPEAN PATENT SPECIFICATION

(11) **EP 1 808 325 B1**
(45) Date of publication and mention of the grant of the patent: **25.02.2009**
(21) Application number: 06125348.0
(22) Date of filing: 04.12.2006
(51) Int. Cl.: B60K 17/16, F16H 57/04

(54) **Differential housing**
Differentialgehäuse
Carter de différentiel

(30) Priority: 17.01.2006 JP 2006008782
(43) Date of publication of application: 18.07.2007
(73) Proprietor: KABUSHIKI KAISHA TOYOTA JIDOSHOKKI, Kariya-shi, Aichi 448-8671 (JP)
(72) Inventor: Masuda, Hideo, Kariya-shi Aichi 448-8671 (JP)
(74) Representative: TBK-Patent

(56) References cited:
- DE-A1- 10 209 166
- US-A- 2 563 680
- US-A- 3 318 173
- US-B1- 6 412 368

## Description

The present invention relates to a differential housing, according to the preamble of claim 1.

JP 5-96613U discloses a conventional differential housing containing a ring gear. The differential housing has a breather hole communicating between the inside and the outside of the differential housing in order to suppress pressure fluctuation in the differential housing. A recessed portion is formed in an inclined ceiling portion of the differential housing, and the breather hole is formed in the recessed portion so that lubricating oil having scattered in the differential housing does not leak to the outside through the breather hole.

However, differential housings are usually made of castings. If the recessed portion is formed on the ceiling portion as in the description of JP 5-96613U, a core in a casting mold is so complex in shape that there is a problem in that freedom of design decreases because a parting direction of the casting mold is limited.

US 6,412,368 B1 shows a generic differential housing having the features of the preamble of claim 1.

Further, US 2,563,680 A shows a differential housing having the features of the preamble of claim 1 except for the breather hole.

The present invention has been made in view of solving the above-mentioned problem, and it is an object of the present invention to provide a differential housing in which it is possible to prevent leakage of lubricating oil through a breather hole to the outside without forming the breather hole in a recessed portion.

The object of the invention is achieved with a differential housing having the features of claim 1.

Further advantageous developments of the invention are subject-matter of the subclaims.

Advantageously, since the recessed portion on the housing cover is formed along the contour line of the part of the ring gear, the recessed portion regulates a direction in which lubricating oil is scattered due to a rotation of the ring gear. Thus, the recessed portion has a function of adjusting a flow direction of the lubricating oil.
Fig. 1 is a perspective view showing a differential housing according to a first embodiment of the present invention;
Fig. 2 is a plan view showing the differential housing according to the first embodiment;
Fig. 3 is a sectional plan view showing the differential housing according to the first embodiment;
Fig. 4 is a cross sectional view taken along the line A-A of Fig. 2;
Fig. 5 is a cross sectional view taken along the line B-B of Fig. 2; and
Fig. 6 is sectional front view showing a differential housing according to a second embodiment of the present invention.

Embodiments of the present invention will be explained below with reference to the attached drawings.

### First embodiment:

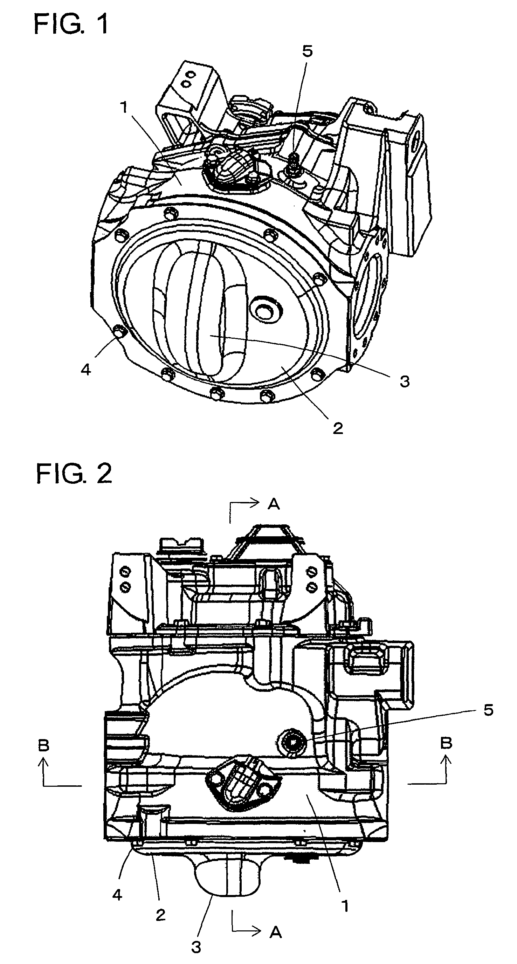

Figs. 1 and 2 each show an overall view of a differential housing according to a first embodiment of the present invention. The differential housing comprises a housing main body 1 made of a casting and a housing cover 2 made of a sheet metal. The housing cover 2 formed in a disk shape includes, in a central part thereof, a cover gear portion 3 projecting outwardly, and is fixed to the housing main body 1 by a plurality of bolts 4. A breather hole (not shown) communicating between the inside and the outside of the housing main body 1 is formed in an upper section of the housing main body 1, and a breather valve 5 is attached to the breather hole.

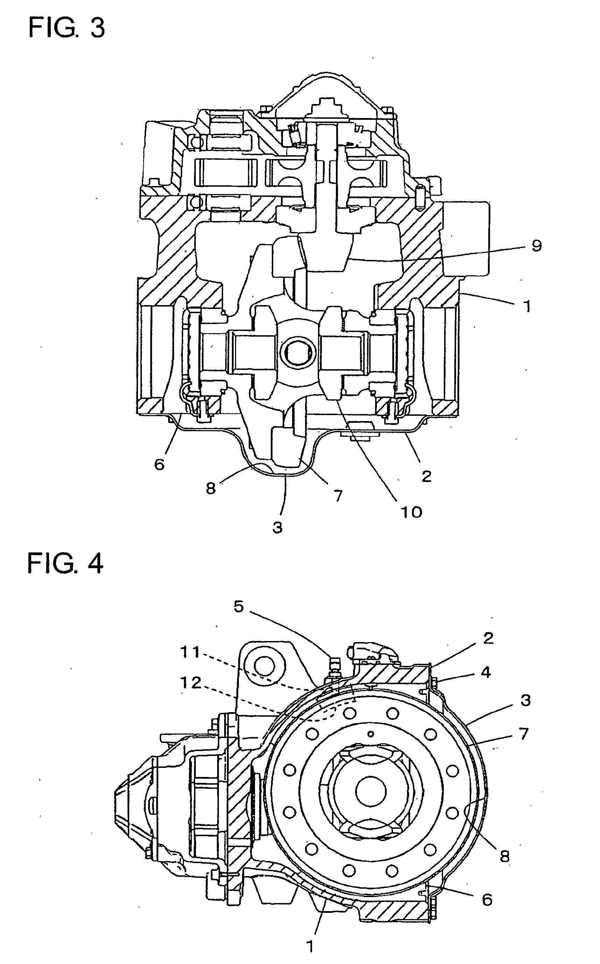

As shown in Fig. 3, an opening 6 is formed on a front end of the housing main body 1, and a ring gear 7 is contained in the housing main body 1 so that a part of the ring gear 7 projects from the opening 6 to the outside. A recessed portion 8, formed along a contour line of the part of the ring gear 7 projecting from the opening 6 to the outside, is formed on an inner surface of the cover gear portion 3 of the housing cover 2. The opening 6 of the housing main body 1 is closed by the housing cover 2.

Fig. 3 further shows a drive pinion 9 engaging with the ring gear 7, a differential gear 10 disposed coaxially with the ring gear 7, etc.

As shown in FIG. 4, the recessed portion 8 of the cover gear portion 3 of the housing cover 2 is formed along the contour line of the ring gear 7 also in a circumferential direction of the ring gear 7, and the inner surface of the cover gear portion 3 is disposed at an approximately constant interval from the ring gear 7.

An inner surface of the housing main body 1 is also formed along the contour line of ring gear 7 with respect to the circumferential direction of ring gear 7 and has an approximately constant interval from the ring gear 7 similarly to the cover gear portion 3.

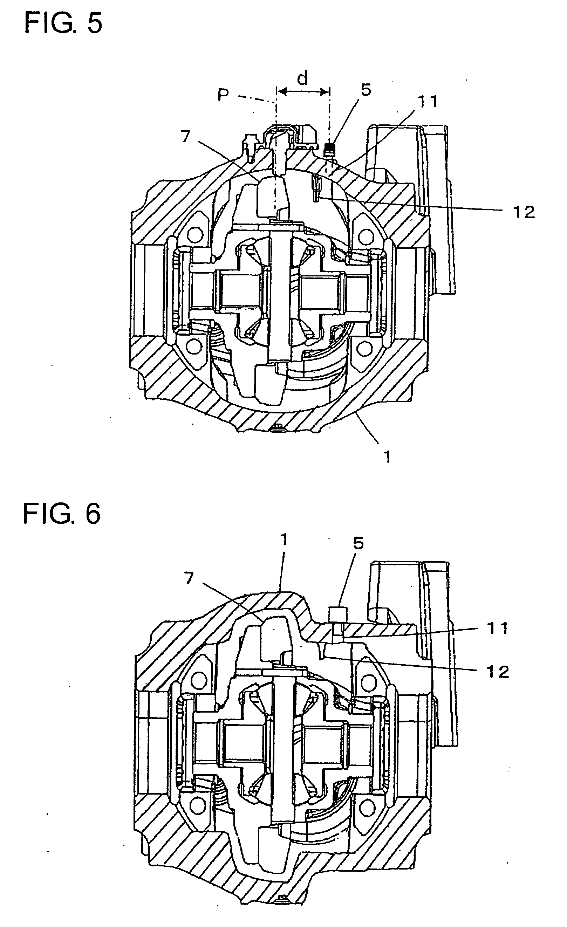

In addition, a partition plate 12 projecting downwardly is formed on a ceiling portion of the housing main body 1 disposed between a breather hole 11 and the ring gear 7 that are formed in the upper section of the housing main body 1. To be more specific, as shown in Fig. 5, the breather hole 11 is formed in a position offset from a rotation surface P of the ring gear 7 by a predetermined distance d in an axial direction of the ring gear 7, and the partition plate 12 is disposed between the breather hole 11 and the rotation surface P of the ring gear 7.

As shown in Figs. 2, 4, and 5 specifically, a part of the housing main body 1 containing the ring gear 7 has a substantially spherical shape.

As explained above, since the recessed portion 8 of the cover gear portion 3 of the housing cover 2 is formed along the contour line of the ring gear 7 and has an approximately constant interval from the ring gear 7, a direction in which the lubricating oil is scattered due to the rotation of the ring gear 7 is controlled, so a flow-adjusting function occurs with respect to the lubricating oil.

Further, since the part of the housing main body 1 containing the ring gear 7 has an substantially spherical shape, and the inner surface of the housing main body 1 is formed along the contour line of ring gear 7 in the circumferential direction of ring gear 7 and has an approximately constant interval from the ring gear 7, the direction in which the lubricating oil is scattered due to the rotation of the ring gear 7 is controlled. In addition, the lubricating oil having flown from the housing cover 2 to the housing main body 1 further flows down along the inner surface of the housing main body 1 with the flow thereof being stable.

As a result, the lubricating oil hardly reaches the breather hole 11, which is offset from the rotation surface P of ring gear 7 by a predetermined distance d in the axial direction of the ring gear 7 and formed on the upper section of housing main body 1, so the leakage of lubricating oil to the outside of the differential housing through the breather valve 5 can be prevented effectively.

Further, since the partition plate 12 projecting downwardly is formed on the ceiling portion of the housing main body 1 disposed between the breather hole 11 and rotation surface P of the ring gear 7, the lubricating oil having scattered due to the rotation of the ring gear 7 and having flown along the ceiling portion of housing main body 1 is stemmed by the partition plate 12 and falls down from the partition plate 12, so the lubricating oil is prevented from flowing to the breather hole 11.

The effect obtained by the partition plate 12 for preventing the lubricating oil from infiltrating into the breather hole 11 becomes more significant in proportion with the length of the partition plate 12 in the circumferential direction of the ring gear 7.

Further, since the part of the housing main body 1 containing the ring gear 7 has an substantially spherical shape, the shape of a core in a casting mold used for casting operations becomes simple. Therefore, freedom in designing the casting mold increases with respect to a parting direction, manufacture of the differential housing is facilitated, and mechanical strength thereof increases.

### Second embodiment:

Fig. 6 is a sectional front view showing a differential housing according to a second embodiment of the present invention. In the second embodiment, the housing main body 1 does not have a spherical shape, and is formed along a contour line of the ring gear 7 both in a circumferential and in an axial direction of the ring gear 7 similarly to the recessed portion 8 of the cover gear portion 3 of the housing cover 2. The housing cover 2 used here is similar to that shown in the first embodiment.

When such the housing main body 1 is used, the function of adjusting the flow direction of the lubricating oil occurs in the housing main body 1 by making the shape of the housing main body 1 fit the shape of the housing cover 2, so the lubricating oil flows around the whole circumference of the ring gear 7 smoothly. Accordingly, the flow of the lubricating oil toward the breather hole 11 decreases, and the leakage of the lubricating oil to the outside of differential housing through the breather valve 5 is thus prevented.

Although the breather hole 11 is formed in the upper section in the housing main body 1 in the first and second embodiments, the present invention is not limited thereto, i.e., the breather hole 11 may be formed on a side section or the like of the housing main body 1.

According to the present invention, since the recessed portion of the housing cover has a function of adjusting the flow direction of the lubricating oil, it is possible to prevent the leakage of the lubricating oil from the breather hole without forming the breather hole in a recessed portion.

## Claims

1. A differential housing, comprising:
a housing main body (1) having an opening (6) and a breather hole (11), in which a ring gear (7) is accommodated so that a part of the ring gear projects from the opening (6); and
a housing cover (2) closing the opening (6) of the housing main body (1) and having a recessed portion (8) for accommodating a part of the ring gear (7) projecting from the opening (6) to the outside,
the recessed portion (8) of the housing cover (2) being formed along a contour line of the part of the ring gear (7) projecting from the opening (6) of the housing main body (1) to the outside,
wherein the breather hole (11) of the housing main body (1) is formed at a position offset from a rotation surface of the ring gear (7) by a predetermined distance in an axial direction of the ring gear (7),
**characterized in that**
a partition plate (12) is formed on and projects from an inner surface of the housing main body and between a rotation surface of the ring gear (7) and the breather hole (11).

2. A differential housing according to claim 1, wherein the housing main body (1) has an inner surface formed along the contour line of the ring gear (7) in a circumferential direction of the ring gear (7).

3. A differential housing according to claim 2, wherein the part of the housing main body (1) containing the ring gear (7) has a substantially spherical shape.

4. A differential housing according to claim 2, wherein the housing main body (1) has an inner surface formed along the contour line of the ring gear (7) also in an axial direction of the ring gear (7).

5. A differential housing according to claim 1, wherein the recessed portion (8) of the housing cover (2) is formed along the contour line of the part of the ring gear (7) both in a circumferential direction and in an axial direction of the ring gear (7).

6. A differential housing according to claim 5, wherein the recessed portion (8) of the housing cover (2) is disposed at an approximately constant interval from the ring gear (7).

7. A differential housing according to claim 1, further comprising a breather valve (5) attached to the breather hole (11) of the,housing main body (1).

## Patentansprüche

1. Differentialgehäuse mit:
einem Gehäusehauptkörper (1), der eine Öffnung (6) und ein Entlüftungsloch (11) hat und in dem ein Ringrad (7) so untergebracht ist, dass ein Teil des Ringrads von der Öffnung (6) hervorsteht; und
einer Gehäuseabdeckung (2), die die Öffnung (6) des Gehäusehauptkörpers (1) schließt und einen ausgesparten Abschnitt (8) zum Aufnehmen eines Teils des Ringrads (7) hat, der von der Öffnung (6) zu der Außenseite vorsteht,
wobei der ausgesparte Abschnitt (8) der Gehäuseabdeckung (2) entlang einer Konturlinie des Teils des Ringrads (7) ausgebildet ist, der von der Öffnung (6) des Gehäusehauptkörpers (1) zu der Außenseite vorsteht,
wobei das Entlüftungsloch (11) des Gehäusehauptkörpers (1) an einer Position ausgebildet ist, die von einer Drehfläche des Ringrads (7) um einen vorbestimmten Abstand in einer axialen Richtung des Ringrads (7) versetzt ist,
**dadurch gekennzeichnet, dass**
eine Trennplatte (12) ausgebildet ist an und vorsteht von einer Innenfläche des Gehäusehauptkörpers und zwischen einer Drehfläche des Ringrads (7) und dem Entlüftungsloch (11).

2. Differentialgehäuse nach Anspruch 1, wobei der Gehäusehauptkörper (1) eine Innenfläche hat, die entlang der Konturlinie des Ringrads (7) in einer Umfangsrichtung des Ringrads (7) ausgebildet ist.

3. Differentialgehäuse nach Anspruch 2, wobei der Teil des Gehäusehauptkörpers (1), der das Ringrad (7) aufnimmt, eine im Wesentlichen kugelige Form hat.

4. Differentialgehäuse nach Anspruch 2, wobei der Gehäusehauptkörper (1) eine Innenfläche hat, die entlang der Konturlinie des Ringrads (7) auch in einer axialen Richtung des Ringrads (7) ausgebildet ist.

5. Differentialgehäuse nach Anspruch 1, wobei der ausgesparte Abschnitt (8) der Gehäuseabdeckung (2) entlang der Konturlinie des Teils des Ringrads (7) sowohl in einer Umfangsrichtung als auch in einer axialen Richtung des Ringrads (7) ausgebildet ist.

6. Differentialgehäuse nach Anspruch 5, wobei der ausgesparte Abschnitt (8) der Gehäuseabdeckung (2) in einem annähernd konstanten Abstand von dem Ringrad (7) angeordnet ist.

7. Differentialgehäuse nach Anspruch 1, das des Weiteren ein Entlüftungsventil (5) aufweist, das an dem Entlüftungsloch (11) des Gehäusehauptkörpers (1) angebracht ist.

## Revendications

1. Carter de différentiel, comprenant :
un corps principal de carter (1) comportant une ouverture (6) et un trou d'évent (11), dans lequel une couronne (7) est logée de telle sorte qu'une partie de la couronne soit saillante depuis l'ouverture (6) ; et
un couvercle de carter (2) fermant l'ouverture (6) du corps principal de carter (1) et comprenant une partie encastrée (8) pour accueillir une partie de la couronne (7) saillante depuis l'ouverture (6) vers l'extérieur,
la partie encastrée (8) du couvercle du carter (2) étant formée le long d'une ligne périphérique de la partie de la couronne (7) saillante depuis l'ouverture (6) du corps principal du carter (1) vers l'extérieur,
dans lequel le trou d'évent (11) du corps principal du carter (1) est formé à une position décalée d'une surface de rotation de la couronne (7) à une distance prédéterminée dans une direction axiale de la couronne (7),
**caractérisé en ce que**
une plaque de séparation (12) est formée sur et est saillante à partir d'une surface intérieure du corps principal du carter et entre une surface de rotation de la couronne (7) et le trou d'évent (11).

2. Carter de différentiel selon la revendication 1, dans lequel le corps principal de carter (1) comprend une surface intérieure formée le long de la ligne périphérique de la couronne (7) dans une direction circonférentielle de la couronne (7).

3. Carter de différentiel selon la revendication 2, dans lequel la partie du corps principal du carter (1) contenant la couronne (7) a une forme sensiblement sphérique.

4. Carter de différentiel selon la revendication 2, dans lequel le corps principal de carter (1) comprend une surface intérieure formée le long de la ligne périphérique de la couronne (7) également dans une direction axiale de la couronne (7).

5. Carter de différentiel selon la revendication 1, dans lequel la partie encastrée (8) du couvercle du carter (2) est formée le long de la ligne périphérique de la partie de la couronne (7) à la fois dans une direction circonférentielle et dans une direction axiale de la couronne (7).

6. Carter de différentiel selon la revendication 5, dans lequel la partie encastrée (8) du couvercle du carter (2) est disposée à un intervalle approximativement constant à partir de la couronne (7).

7. Carter de différentiel selon la revendication 1, comprenant également une soupape de respiration (5) fixée au trou d'évent (11) du corps principal de carter (1).
